# EUROPEAN PATENT SPECIFICATION

(11) **EP 2 347 613 B1**
(45) Date of publication and mention of the grant of the patent: **07.05.2014**
(21) Application number: 08803893.0
(22) Date of filing: 09.09.2008
(51) Int. Cl.: H04W 12/06, H04L 29/06, H04L 9/32

(54) **AUTHENTICATION IN A COMMUNICATION NETWORK**
AUTHENTIFIZIERUNG IN EINEM KOMMUNIKATIONSNETZ
AUTHENTIFICATION DANS UN RÉSEAU DE COMMUNICATION

(43) Date of publication of application: 27.07.2011
(73) Proprietor: Telefonaktiebolaget L M Ericsson (PUBL), 164 83 Stockholm (SE)
(72) Inventor: LINDHOLM, Fredrik, 112 15 Stockholm (SE); ROOS, Per, S-153 36 Järna (SE)
(74) Representative: Mitchell, Matthew Benedict David
(86) International application number: PCT/EP2008/061925
(87) International publication number: WO 2010/028681

(56) References cited:
- EP-A- 1 414 212
- WO-A-98/49855
- WO-A-2006/126077
- TALUKDER A K ET AL: "Asynchronous multi factor model (AMFM) of security for wireless MAN" IEEE TENCON 2003. CONFERENCE ON CONVERGENT TECHNOLOGIES FOR THE ASIA-PACIFIC REGION. BANGALORE, INDIA, OCT. 15 - 17, 2003; [IEEE REGION 10 ANNUAL CONFERENCE], NEW YORK, NY : IEEE, US, vol. 2, 15 October 2003 (2003-10-15), pages 656-660, XP010687007 ISBN: 978-0-7803-8162-9

## Description

### TECHNICAL FIELD

The present invention relates to the field of authentication in a communication network.

### BACKGROUND

When a user wishes to access a communication network, he or she is typically authenticated. Similarly, a user may be authenticated before being allowed to access a particular domain or service. The Third Generation Partnership Project (3GPP) has specified a protocol known as Authentication and Key Agreement (AKA) for performing authentication and session key distribution in Universal Mobile Telecommunications System (UMTS) networks. UMTS AKA is specified in 3GPP TS.33.102 and is a challenge-response based mechanism that uses symmetric cryptography (i.e. AKA uses a shared secret). AKA is typically run in a UMTS Services Identity Module (USIM), which resides on a smart card like device (referred to as a Universal Integrated Circuit Card or UICC) that also provides tamper resistant storage of shared secrets. AKA is run at registration and re-registration of a User Equipment (UE - where a UE is defined as the combination of a Mobile Station (MS) and a USIM) with its home network. For accessing the IP Multimedia Subsystem, AKA may be run in an IP Multimedia Subsystem Services Identity Module (ISIM). AKA may be employed in 2G networks (i.e. GSM), in which case the UICC will be provisioned with both the USIM and Subscriber Identity Module (SIM) applications. In addition, it had been decided that next generation architectures (including the System Architecture Evolution / Long Term Evolution (SAE/LTE) architecture currently being standardised) will use AKA or an AKA based security protocol.

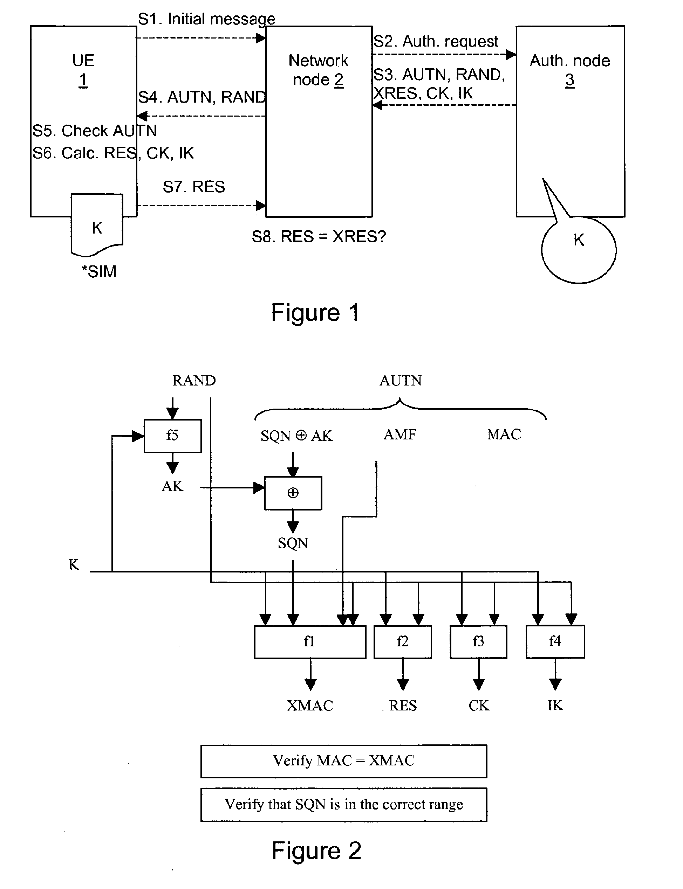

AKA procedures are performed based on a shared secret between the network and the UE (Key K). With current technology, K is stored in the UICC. Figure 1 illustrates the AKA procedure. A UE 1 sends (S1) an initial request to a network node 2 (which could be a Visitor Location Register, VLR, a SGSN, a Serving-Call Session Control Function, S-CSCF, or any other suitable node depending on the type of network). The message includes the UE's identity (for example an International Mobile Subscriber Identity, IMSI, in the case of mobile access, or an IP Multimedia Private identity, IMPI, in case of an IMS network). An authentication request is performed S2 with an authenticating node 3 such as an Authentication Centre (AuC) or a Home Subscriber Server (HSS), in which an Authentication Vector (AV) is received (S3) from the authenticating node. The AV includes a random value, RAND, an authentication token (AUTN/AUTHN) which allows the UE 1 to authenticate the network, an expected response XRES, and encryption and integrity keys CK/IK.

The network node 2 challenges the UE 1 by sending (S4) the authentication token and random value to the UE 1. An ISIM or USIM application on the UICC in the UE 1 is used to check (S5) the authentication token and calculate (S6), based on the received AUTN, an expected MAC, XMAC, a response (RES), and encryption and integrity keys CK/IK. The response RES is sent (S7) from the UE 1 to the network node 2, and the network node determines whether RES = XRES; if so, then the UE 1 is authenticated.

Figure 2 illustrates the calculation of keys and responses in the UICC in step S6 of Figure 1. The UE 1 compares the calculated XMAC with the received MAC in AUTN. If equal, the network is considered to be authenticated. A sequence number SQN, is also derived from the AUTN and checked against a locally stored sequence number range. Different functions f1, f2, f3 and f4 are used respectively to calculate XMAC, RES, CK and IK. These functions require K. The UE is then responding to the network with the calculated response RES. The network is comparing the received RES with the XRES received from the AuC/HSS. If equal, the user is considered to be authenticated.

Recently, the concept of "Soft SIMs" or "Downloadable SIMs" has been discussed. The term *SIM is used to denote any type of SIM, such as USIM, ISIM, and 2G SIM. Soft *SIM applications do not reside on a physical UICC. However, a tamper resistant security environment cannot be provided for Soft *SIM applications. Examples of attacks that may compromise the security of a Soft *SIM include:
- Reverse engineering of the Soft *SIM application code (from binary to source code) to extract the secret K, and by doing so making it possible to clone the Soft *SIM.
- Password cracking. Copying the stored K, which must be stored on the user device. The secret K may, of course, be encrypted on the device, and if so, the malicious software can perform an attack to get the secret K by, for example, sending an IMS Register message to the IMS system to receive AUTN and RAND, or alternatively by attempting to decrypt K from the copies encrypted K. Decrypted K can then be used as input to the f1 function to obtain XMAC. XMAC is compared with MAC (from AUTN). If these match, then K has been successfully decrypted. Note that as K is protected based on a user chosen password, the information entropy of K is not high, which makes such a brute force attack to find K possible. Note also that these steps could be performed without the need to manipulate the IMS application in the terminal as such.

A number of proposals to counter this have been discussed. One proposal is to provide an inbuilt tamper resistant module in the device. However, whilst tamper resistant hardware may solve the security issues (against theft and exposure of the key, K), it is an expensive solution.

Another proposal is to encrypt or obscure the *SIM in the software as such (in a similar way to the way in which a software based digital certificate is stored). However, even with K and/or the whole *SIM encrypted, it is relatively simple to make a brute force attack to recover the key K. In general, anything protected by a PIN or password has such a low information entropy that a computer can make an exhaustive search to find the real key K.

One method that has been used in some password protection systems is to only encrypt the key with the password. The attacker should not know when the correct key K has been obtained (as the attacker has nothing to compare a recovered key with). However, as illustrated in Figure 1, in the case of AKA the UE 1 receives the MAC in the AUTN prior to the UE 1 sending verification (RES) to the network node 2. This means that the attacker can request the MAC and, based on this, perform an off-line attack to find the correct K. The correct K is found when MAC = XMAC. In other words, a problem that AKA has is that it provides the UE 1 the means to authenticate the network before the network can authenticate the user.
WO 98/49855 is concerned with authenticating terminal equipment, and not a user.

### SUMMARY

Many different protocols exist which have different properties, in particular the number of message round trips that are required in order to perform the authentication. The present invention addresses protocols such as AKA which only require one message round trip. A problem with using AKA with Soft SIMs is that the network is authenticated before the user. However, the invention is not limited to Soft SIMs. According to a first aspect of the invention, there is provided a method of authenticating a user in a communication network. A network node receives an initial request message from a user device, and sends an authentication message to an authentication node. The network node then receives from the authentication node an expected response value and an authentication token from the authentication node. The expected response value is determined using a first shared secret not stored at the user device and known to the authentication node and the user, and a second shared secret known to the authentication node and the user device, and the authentication token is determined using the second shared secret. The network node sends the authentication token from the network node to the user device, and in response receives a response value calculated using authentication token, the first shared secret and the second shared secret. The network node then determines if the response value matches the expected response value and, if so, authenticates the user. The method allows the user device to authenticate the network independently of the shared secret that the network uses to authenticate the user. The first shared secret comprises a one-time key provided to the user which is valid to allow the user to access the communication network a single time. This allows the user to access the network from a non-secure device, such as a shared computer. In order to detect fraudulent attempts to guess the first shared secret, the method comprises, prior to authenticating the user, determining whether previous authentication attempts have been successful, and using this determination in determining whether to authenticate the user.

The network node is optionally selected from one of a Visitor Location Register, a Serving-Call Session Control Function, a Proxy-Call Session Control Function, a Serving GPRS Support Node, a Radio Network Controller, a Home Subscriber Server (in the event that the authentication node is an Authentication Centre), a Mobility Management Entity, an Evolved Node-B, and a General Packet Radio Services Serving Support Node, the user device is optionally selected from one of a mobile telephone, a personal computer and User Equipment, and authentication node is optionally selected from one of a Home Subscriber Server and an Authentication Centre.

As an option, the method comprises receiving at the network node an encryption key and an integrity key, both keys having been determined using the first shared secret and the second shared secret.

The one-time key is optionally provided to the user using a second communication network, although it is possible for other delivery methods to be used.

According to a second aspect, there is provided a network node for use in a communication network. First receiving means is provided for receiving an initial request message from a user device, and first transmitting means is provided for sending an authentication message to an authentication node. Second receiving means is arranged to receive from the authentication node an expected response value and an authentication token. The expected response value is determined using a first shared secret not stored at the user device and known to the authentication node and the user, the first shared secret comprising a one-time key provided to the user which is valid to allow the user to access the communication network a single time and a second shared secret known to the authentication node and the user device. The authentication token is determined using the second shared secret. Second transmitting means is arranged to transmit the authentication token to the user device. Third receiving means is provided for receiving from the user device a response value calculated using authentication token, the first shared secret and the second shared secret. A processor is then provided for determining if the response value matches the expected response value and, if so, authenticating the user. In order to reduce the risk of a malicious third party attempting to guess the first shared secret, the processor is arranged to determine whether previous authentication attempts have been successful, and using this determination to determine whether to authenticate the user.

The network node is optionally selected from any of a Visitor Location Register, a Serving-Call Session Control Function, a Proxy-Call Session Control Function, a Serving GPRS Support Node, a Radio Network Controller, a Home Subscriber Server (in the event that the authentication node is an Authentication Centre), a Mobility Management Entity, an Evolved Node-B, and a General Packet Radio Services Serving Support Node.

The network node functions are optionally distributed over a plurality of physical locations. For example, in an IMS communication network, the first receiving means, first transmitting means and second receiving means may be located at a Proxy-Call Session Control Function, and the second transmitting and third receiving means may be located at a Serving-Call Session Control function.

### BRIEF DESCRIPTION OF THE DRAWINGS

Figure 1 is a signalling diagram illustrating a known Authentication and Key Agreement procedure;
Figure 2 illustrates schematically the calculation of keys and responses at a User Equipment in a part of a known Authentication and Key Agreement procedure;
Figure 3 is a signalling diagram illustrating an Authentication and Key Agreement procedure according to an embodiment of the invention;
Figure 4 illustrates schematically the calculation of keys and responses at a user device in the Authentication and Key Agreement procedure according to an embodiment of the invention;
Figure 5 illustrates schematically in a block diagram a user device according to an embodiment of the invention;
Figure 6 illustrates schematically in a block diagram an authentication node according to an embodiment of the invention; and
Figure 7 illustrates schematically in a block diagram a network node according to an embodiment of the invention.

### DETAILED DESCRIPTION

To allow for a more secure system, where the attacker could not obtain any information from the network that can be used to reverse engineer the secret key K, a new secret is introduced, which is shared between the user and the authentication node 3. This shared secret is herein denoted Kp. Note that Kp is not stored in the user device. Kp may be any suitable secret, such as a password or pass-phrase, or Personal Identification Number (PIN). Kp is distinct from K, which is stored in the Soft *SIM or UICC as described above.

The following example describes the invention in circumstances where the user device is a User Equipment 1, the authentication node may be an Authentication Centre (AuC), a Home Subscriber Server (HSS), or any other suitable authentication node, and the network node 2 may be a VLR, a SGSN, a S-CSC, or any other suitable node depending on the type of network.

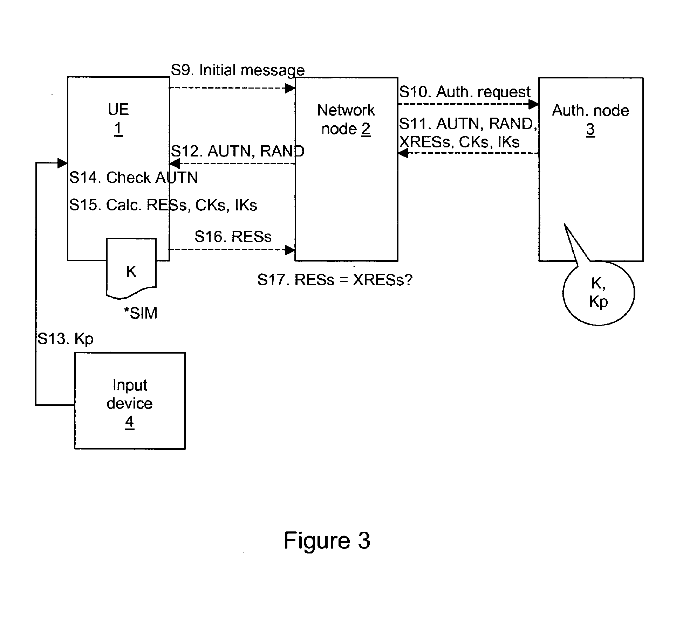

Referring to Figure 3, an input device 4 is provided which allows a user to input data such as the Kp into the User Equipment (UE) 1. The following numbering refers to the signalling steps illustrated in Figure 3:
S9. The UE 1 sends an initial request message requesting access in the network to the network node 2.
S10. The network node 2 sends an authentication message to the authentication node 3.
S11. The authentication node 3 replies to the network node 2. The reply contains an authentication token, generated using K, a random number, an expected response XRESs, which is generated using both K and Kp, and encryption and integrity keys CKs and IKs, which are also generated using both K and Kp.
S12. The network node 2 sends a message to the UE 1 containing the authentication token and the random number.
S13. The user enters Kp into the input device 4. Note that the input device may be any suitable input device, for example a keyboard, a touch-screen, a mouse, a microphone and so on. Kp is passed to the UE 1. Note that this step can happen at any point up until now.
S14. The UE 1 checks the authorisation code using K that is stored in the UE's Soft *SIM or UICC, to authenticate the network.
S15. The UE 1 calculates a response RESs, using both K and Kp. The UE also calculates the encryption and integrity keys using K and Kp.
S16. The UE 1 sends RESs to the network node 2.
S17. The network node 2 compares RESs received from the UE 1 with XRESs received from the authentication node 3. As Kp is only known to the user and the authentication node 3, and XRESs and RESs are both determined using KP, then if RESs = XRESs, the user can be authenticated in the network.

Note that the authentication code is still generated according to the standard AKA procedure using K and does not require Ks. This makes it possible for the UE 1 to authenticate the network based on K. However, an attacker would not be able to guess the value of RESs as the attacker does not have access to Kp.

If the network receives multiple (for example, three consecutive) responses of RESs that do not match XRESs, the user account may be locked as it is reasonable to assume that the user does not know Kp.

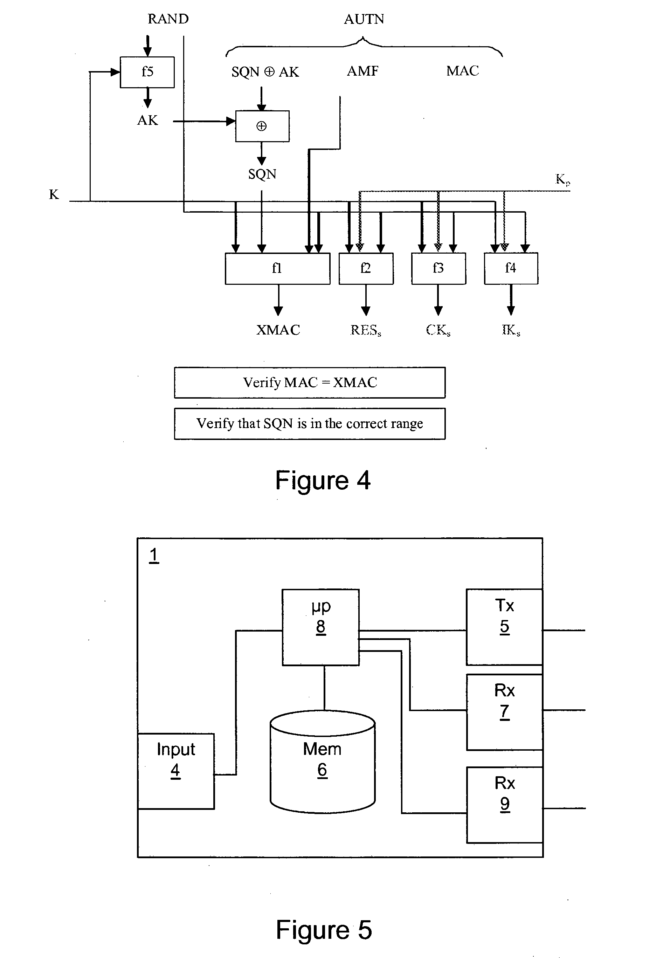

Figure 4 herein illustrates the calculation of keys and responses at the UE 1 in step S15 of Figure 3.

It may be desirable to provide network services in a high-risk environment, such as a shared computer. In this case, Soft *SIM credentials can be downloaded as part of an Internet application to the shared computer. In order to prevent a Trojan program from recording Kp and later using the Soft *SIM, Kp is in this embodiment based upon a one-time key. There are several mechanisms for delivering the one-time key Kp to the user, for example using mobile telephone SMS, secure token cards and so on.

In the scenario where the communication network is an IP Multimedia Subsystem (IMS) network, the AKA procedures is used to establish an IPsec tunnel (using CK/IK). RES is sent over this IPsec tunnel. In this case, a mechanism to stop the UE from trying various different Kp is performed in the P-CSCF, which monitors if many IPsec packets from the UE 1 are received that cannot be authenticated using IK. If so, the P-CSCF removes the IPsec SA and blocks the UE 1 from trying to send messages over the IPsec tunnel. In another embodiment, it is possible to allow the P-CSCF to indicate in an unprotected REGISTER message sent to the S-CSCF if the UE 1 has previously tried to access without valid values of CK/IK. The S-CSCF or HSS can then make a final decision whether to block the account or not, based on the history of the UE 1 trying to access the network without knowing Kp.

Turning now to Figure 5, there is illustrated a user device according to an embodiment of the invention. A transmitter 5 is provided for sending the initial request message to the network node. An input device 4, as described above, is also provided to allow the user to input Kp. A memory 6 such as a Soft *SIM stores K. A receiver 7 is provided for receiving from the network node 2 a message containing the authentication token. A processor 8 is arranged to validate the authentication token and determine, using K and Kp, a response value and CK and IK. Second transmission means 9 are also provided for sending to the network node 2 the determined response value. Of course, the first and second transmission means may be embodied in a single transmitter or transceiver.

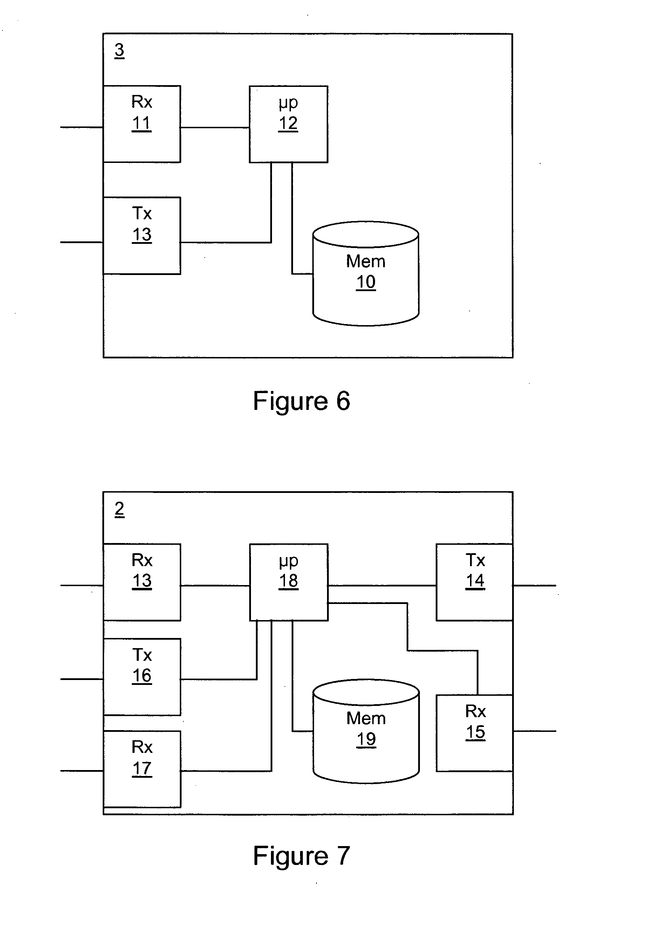

Turning now to Figure 6, there is illustrated an authentication node 3 such as an AuC or HSS according to an embodiment of the invention. A memory 10 is provided for storing K and Kp. A receiver 11 is arranged to receive an authentication message from the network node. In response to this message, a processor 12 determines an authentication token using K, and an expected response value, CK, and IK, using K and Kp. A transmitter 13 is provided for sending a message to the network node, the message including the authentication token and the expected response value.

Figure 7 illustrates the network node 2, which is provided with first receiving means 13 for receiving an initial request message from a user device 1, and first transmitting means 14 for sending an authentication message to the authentication node3. Second receiving means are provided 15 for receiving from the authentication node the expected response value and the authentication token. Second transmitting means 16 are provided for sending the authentication token to the user device 1, and third receiving means 17 are provided for receiving from the user device a response value calculated using the authentication token, K and Kp. A processor 18 determines whether the response value matches the expected response value and, if so, authenticates the user. Of course, the transmitting and receiving means may be embodied in different transmitters, receivers and transceivers, or may be embodied in a single transceiver.

The invention allows the use of a Soft *SIM which is not stored in tamper resistant hardware such that a malicious party who has access to the credentials cannot access the network. Additionally, a one time Ks may be provided, which increases overall security.

It will be appreciated by the person of skill in the art that various modifications may be made to the above-described embodiments without departing from the scope of the present invention.

## Claims

1. A method of authenticating a user for use in a communication network, the method comprising, at a network node (2):
receiving (S9) an initial request message from a user device (1);
sending (S10) an authentication message to an authentication node (3);
receiving (S11) at the network node (2) an expected response value and an authentication token from the authentication node (3), the expected response value having been determined using a first shared secret not stored at the user device (1) and known to the authentication node (3) and the user, and a second shared secret known to the authentication node (3) and the user device (1), the authentication token having been determined using the second shared secret, the first shared secret comprising a one-time key provided to the user which is valid to allow the user to access the communication network a single time;
sending (S12) the authentication token from the network node (2) to the user device (3);
receiving (S16) from the user device (1) a response value calculated using authentication token, the first shared secret and the second shared secret;
determining (S17) if the response value matches the expected response value and, if so, authenticating the user; and
prior to authenticating the user, determining whether previous authentication attempts have been successful, and using this determination in determining whether to authenticate the user.

2. The method according to claim 1, wherein the network node (2) is selected from one of a Visitor Location Register, a Serving-Call Session Control Function, a Proxy-Call Session Control Function, a Serving GPRS Support Node, a Radio Network Controller, a Home Subscriber Server, a Mobility Management Entity, an Evolved Node-B, and a General Packet Radio Services Serving Support Node;
the user device (1) is selected from one of a mobile telephone, a personal computer and User Equipment; and
the authentication node (3) is selected from one of a Home Subscriber Server and an Authentication Centre.

3. The method according to claim 1 or 2, further comprising receiving at the network node (2) an encryption key and an integrity key, both keys having been determined using the first shared secret and the second shared secret.

4. The method according to claim 1, further comprising providing the one-time key to the user using a second communication network.

5. A network node (2) for use in a communication network, the network node comprising:
first receiving means (13) for receiving an initial request message from a user device (1);
first transmitting means (14) for sending an authentication message to an authentication node (3);
second receiving means (15) for receiving from the authentication node (3) an expected response value and an authentication token, the expected response value having been determined using a first shared secret not stored at the user device (1) and known to the authentication node and the user, the first shared secret comprising a one-time key provided to the user which is valid to allow the user to access the communication network a single time, and a second shared secret known to the authentication node (3) and the user device (1), and the authentication token having been determined using the second shared secret;
second transmitting (16) means for sending the authentication token to the user device (1);
third receiving means (17) for receiving from the user device (1) a response value calculated using authentication token, the first shared secret and the second shared secret;
a processor (18) for determining if the response value matches the expected response value and further arranged to determine whether previous authentication attempts have been successful and, if so, authenticating the user.

6. The network node (2) according to claim 5, wherein the network node (2) is selected from any of a Visitor Location Register, a Serving-Call Session Control Function, a Proxy-Call Session Control Function, a Serving GPRS Support Node, a Radio Network Controller, a Home Subscriber Server, a Mobility Management Entity, an Evolved Node-B, and a General Packet Radio Services Serving Support Node.

7. The network node (2) according to claim 5 or 6, wherein network node functions are distributed over a plurality of physical locations.

## Patentansprüche

1. Verfahren zur Authentifizierung eines Benutzers zur Verwendung in einem Kommunikationsnetz, wobei das Verfahren umfasst: in einem Netzknoten (2) erfolgendes
Empfangen (S9) einer Erstanforderungsnachricht von einer Benutzervorrichtung (1);
Senden (S 10) einer Authentifizierungsnachricht in einen Authentifizierungsknoten (3);
Empfangen (S 11) eines erwarteten Antwortwertes und eines Authentifizierungs-Tokens in dem Netzknoten (2) von dem Authentifizierungsknoten (3), wobei der erwartete Antwortwert bestimmt worden ist unter Verwendung eines ersten gemeinsamen Geheimnisses, das nicht in der Benutzervorrichtung (1) gespeichert ist und das dem Authentifizierungsknoten (3) und dem Benutzer bekannt ist, und eines zweiten gemeinsamen Geheimnisses, das dem Authentifizierungsknoten (3) und der Benutzervorrichtung (1) bekannt ist, wobei das Authentifizierungs-Token bestimmt worden ist unter Verwendung des zweiten gemeinsamen Geheimnisses, wobei das erste gemeinsame Geheimnis einen für den Benutzer bereitgestellten Einmal-Schlüssel umfasst, der dafür gültig ist, dass der Benutzer ein einziges Mal auf das Kommunikationsnetz zugreifen kann;
Senden (S 12) des Authentifizierungs-Tokens von dem Netzknoten (2) an die Benutzervorrichtung (3);
Empfangen (S 16) eines unter Verwendung des Authentifizierungs-Tokens, des ersten gemeinsamen Geheimnisses und des zweiten gemeinsamen Geheimnisses berechneten Antwortwertes von der Benutzervorrichtung (1);
Bestimmen (S 17), ob der Antwortwert dem erwarteten Antwortwert entspricht, und wenn ja, Authentifizieren des Benutzers; und
vor der Authentifizierung des Benutzers erfolgendes Bestimmen, ob vorherige Authentifizierungsversuche erfolgreich gewesen sind, und Verwenden dieser Bestimmung beim Bestimmen, ob der Benutzer authentifiziert werden soll.

2. Verfahren nach Anspruch 1, wobei der Netzknoten (2) aus einem von Folgendem ausgewählt ist: ein Visitor Location Register, eine Serving-Call Session Control Function, eine Proxy-Call Session Control Function, ein Serving GPRS Support Node, ein Radio Network Controller, ein Home Subscriber Server, eine Mobility Management Entity, ein Evolved Node-B und ein General Packet Radio Services Serving Support Node;
die Benutzervorrichtung (1) aus einem von Folgendem ausgewählt ist: ein Mobiltelefon, ein Personal-Computer und ein Benutzergerät; und
der Authentifizierungsknoten (3) aus einem von Folgendem ausgewählt ist: ein Home Subscriber Server und ein Authentifizierungszentrum.

3. Verfahren nach Anspruch 1 oder 2, ferner umfassend: im Netzknoten (2) erfolgendes Empfangen eines Verschlüsselungsschlüssels und eines Integritätsschlüssels, wobei beide Schlüssel unter Verwendung des ersten gemeinsamen Geheimnisses und des zweiten gemeinsamen Geheimnisses bestimmt worden sind.

4. Verfahren nach Anspruch 1, ferner umfassend: Bereitstellen des Einmal-Schlüssels für den Benutzer unter Verwendung eines zweiten Kommunikationsnetzes.

5. Netzknoten (2) zur Verwendung in einem Kommunikationsnetz, wobei der Netzknoten umfasst:
ein erstes Empfangsmittel (13) zum Empfangen einer Erstsanforderungsnachricht von einer Benutzervorrichtung (1);
ein erstes Übertragungsmittel (14) zum Senden einer Authentifizierungsnachricht an einen Authentifizierungsknoten (3);
ein zweites Empfangsmittel (15) zum Empfangen eines erwarteten Antwortwertes und eines Authentifizierungs-Tokens von dem Authentifizierungsknoten (3), wobei der erwartete Antwortwert bestimmt worden ist unter Verwendung eines ersten gemeinsamen Geheimnisses, das nicht in der Benutzervorrichtung (1) gespeichert ist und das dem Authentifizierungsknoten und dem Benutzer bekannt ist, wobei das erste gemeinsame Geheimnis einen für den Benutzer bereitgestellten Einmal-Schlüssel umfasst, der dafür gültig ist, dass der Benutzer ein einziges Mal auf das Kommunikationsnetz zugreifen kann, und eines zweites gemeinsamen Geheimnisses, das dem Authentifizierungsknoten (3) und der Benutzervorrichtung (1) bekannt ist, und wobei das Authentifizierungs-Token unter Verwendung des zweiten gemeinsamen Geheimnisses bestimmt worden ist;
ein zweites Übertragungsmittel (16) zum Senden des Authentifizierungs-Tokens an die Benutzervorrichtung (1);
ein drittes Empfangsmittel (17) zum Empfangen eines unter Verwendung des Authentifizierungs-Tokens, des ersten gemeinsamen Geheimnisses und des zweiten gemeinsamen Geheimnisses berechneten Antwortwertes von der Benutzervorrichtung (1);
einen Prozessor (18) zum Bestimmen, ob der Antwortwert dem erwarteten Antwortwert entspricht, und ferner dafür eingerichtet, zu bestimmen, ob vorherige Authentifizierungsversuche erfolgreich gewesen sind, und wenn ja, Authentifizieren des Benutzers.

6. Netzknoten (2) nach Anspruch 5, wobei der Netzknoten (2) aus einem von Folgendem ausgewählt ist: ein Visitor Location Register, eine Serving-Call Session Control Function, eine Proxy-Call Session Control Function, ein Serving GPRS Support Node, ein Radio Network Controller, ein Home Subscriber Server, eine Mobility Management Entity, ein Evolved Node-B und ein General Packet Radio Services Serving Support Node.

7. Netzknoten (2) nach Anspruch 5 oder 6, wobei Netzknotenfunktionen über eine Vielzahl von physischen Standorten verteilt sind.

## Revendications

1. Procédé d'authentification d'un utilisateur, destiné à être utilisé dans un réseau de communication, le procédé consistant à, au niveau d'un noeud de réseau (2) :
recevoir (S9) un message de demande initiale en provenance d'un dispositif d'utilisateur (1) ;
envoyer (S10) un message d'authentification à un noeud d'authentification (3) ;
recevoir (S11), au niveau du noeud de réseau (2), une valeur de réponse attendue et un jeton d'authentification en provenance du noeud d'authentification (3), la valeur de réponse attendue ayant été déterminée en utilisant un premier secret partagé non stocké au niveau du dispositif d'utilisateur (1) et connu du noeud d'authentification (3) et de l'utilisateur, et un second secret partagé connu du noeud d'authentification (3) et du dispositif d'utilisateur (1), le jeton d'authentification ayant été déterminé en utilisant le second secret partagé, le premier secret partagé comprenant une clé à usage unique fournie à l'utilisateur, laquelle est valide en vue de permettre à l'utilisateur d'accéder au réseau de communication une seule fois ;
envoyer (S12) le jeton d'authentification du noeud de réseau (2) au dispositif d'utilisateur (3) ;
recevoir (S16), en provenance du dispositif d'utilisateur (1), une valeur de réponse calculée en utilisant le jeton d'authentification, le premier secret partagé et le second secret partagé ;
déterminer (S 17) si la valeur de réponse correspond à la valeur de réponse attendue et, le cas échéant, authentifier l'utilisateur ; et
préalablement à l'authentification de l'utilisateur, déterminer si des tentatives d'authentification précédentes ont réussi, et utiliser cette détermination en vue de déterminer s'il convient d'authentifier l'utilisateur.

2. Procédé selon la revendication 1, dans lequel le noeud de réseau (2) est sélectionné à partir de l'un parmi un enregistreur de localisation des visiteurs, une fonction de service de commande de session d'appel, une fonction de relais de commande de session d'appel, un noeud de support GPRS de service, un contrôleur de réseau radio, un serveur d'abonné résidentiel, une entité de gestion de la mobilité, une station « Node B » évoluée, et un noeud de service GPRS de transit ;
le dispositif d'utilisateur (1) est sélectionné à partir de l'un parmi un téléphone mobile, un ordinateur personnel et un équipement d'utilisateur ; et
le noeud d'authentification (3) est sélectionné à partir de l'un parmi un serveur d'abonné résidentiel et un centre d'authentification.

3. Procédé selon la revendication 1 ou 2, consistant en outre à recevoir, au niveau du noeud de réseau (2), une clé de chiffrement et une clé d'intégrité, les deux clés ayant été déterminées en utilisant le premier secret partagé et le second secret partagé.

4. Procédé selon la revendication 1, consistant en outre à fournir la clé à usage unique à l'utilisateur en utilisant un second réseau de communication.

5. Noeud de réseau (2) destiné à être utilisé dans un réseau de communication, le noeud de réseau comprenant :
un premier moyen de réception (13) pour recevoir un message de demande initiale en provenance d'un dispositif d'utilisateur (1) ;
un premier moyen de transmission (14) pour envoyer un message d'authentification à un noeud d'authentification (3) ;
un deuxième moyen de réception (15) pour recevoir, en provenance du noeud d'authentification (3), une valeur de réponse attendue et un jeton d'authentification, la valeur de réponse attendue ayant été déterminée en utilisant un premier secret partagé non stocké au niveau du dispositif d'utilisateur (1) et connu du noeud d'authentification et de l'utilisateur, le premier secret partagé comprenant une clé à usage unique fournie à l'utilisateur, laquelle est valide en vue de permettre à l'utilisateur d'accéder au réseau de communication une seule fois, et un second secret partagé connu du noeud d'authentification (3) et du dispositif d'utilisateur (1), et le jeton d'authentification ayant été déterminé en utilisant le second secret partagé ;
un second moyen de transmission (16) pour envoyer le jeton d'authentification au dispositif d'utilisateur (1) ;
un troisième moyen de réception (17) pour recevoir, en provenance du dispositif d'utilisateur (1), une valeur de réponse calculée en utilisant le jeton d'authentification, le premier secret partagé et le second secret partagé ;
un processeur (18) destiné à déterminer si la valeur de réponse correspond à la valeur de réponse attendue, et en outre agencé de manière à déterminer si des tentatives d'authentification précédentes ont réussi, et le cas échéant, à authentifier l'utilisateur.

6. Noeud de réseau (2) selon la revendication 5, dans lequel le noeud de réseau (2) est sélectionné à partir de l'un quelconque parmi un enregistreur de localisation des visiteurs, une fonction de service de commande de session d'appel, une fonction de relais de commande de session d'appel, un noeud de support GPRS de service, un contrôleur de réseau radio, un serveur d'abonné résidentiel, une entité de gestion de la mobilité, une station « Node B » évoluée et un noeud de service GPRS de transit.

7. Noeud de réseau (2) selon la revendication 5 ou 6, dans lequel des fonctions de noeud de réseau sont réparties sur une pluralité d'emplacements physiques.
